Europäisches Patentamt

European Patent Office

Office européen des brevets

(11) Veröffentlichungsnummer: **0 400 455**
**A1**

(12) **EUROPÄISCHE PATENTANMELDUNG**

(21) Anmeldenummer: **90109674.3**

(22) Anmeldetag: **22.05.90**

(51) Int. Cl.⁵: **H02P 1/46, H02P 3/24**

(30) Priorität: **01.06.89 DE 3917819**

(43) Veröffentlichungstag der Anmeldung:
**05.12.90 Patentblatt 90/49**

(84) Benannte Vertragsstaaten:
**AT BE CH DE FR GB IT LI LU NL SE**

(71) Anmelder: **BERGER LAHR GMBH**
**Breslauer Strasse 7**
**D-7630 Lahr(DE)**

(72) Erfinder: **Gfrörer, Ralf, Dr. Dipl.-Ing.**
**Im Egert 1**
**D-7630 Lahr 17(DE)**
Erfinder: **Schörlin, Felix, Dipl.-Ing.**
**Eisenbahnstrasse 26**
**D-7630 Lahr(DE)**

(74) Vertreter: **Schmitt, Hans, Dipl.-Ing. et al**
**Patentanwälte Dipl.-Ing H. Schmitt Dipl.-Ing.**
**W. Maucher Dreikönigstrasse 13**
**D-7800 Freiburg(DE)**

(54) Synchronmotor sowie Verfahren zum Betreiben dieses Synchronmotors.

㉣ Bei einem selbstanlaufenden, einen Hilfsstrang (W2) und einen Hauptstrang (W1) sowie einen Betriebskondensator (C) aufweisenden Synchronmotor (1) ist vorgesehen, daß dieser vor dem Anlaufen zunächst in einer Ausrichtphase durch Gleichstromspeisung des Hilfsstranges oder ggf. beider Stränge, mit seinem Rotor in eine optimale Anfangslage gebracht wird. Beim Einschalten des Motors wird dann im Nulldurchgang der Netzspannung phasenrichtig zur Ausrichtstellung des Rotors eingeschaltet. Durch die definierte Ausgangslage des Rotors kann der Motor gegen ein größeres Lastträgheitsmoment als bisher sicher anlaufen. Außerdem können definierte Wege zurückgelegt werden, so daß sich dieser Motor auch für einfache Positionieraufgaben bei geringem Aufwand eignet.

Fig.1

EP 0 400 455 A1

Die Erfindung betrifft ein Verfahren zum Betreiben eines selbstanlaufenden, einen Hilfsstrang und einen Hauptstrang aufweisenden Synchronmotors mit Betriebskondensator an einem Einphasen-Netz.

Beim Anlauf kleinerer Synchronmotoren mit Betriebskondensator am Einphasen-Netz treten mehr oder weniger starke Pendelungen auf. Die Zeitdauer bis zum Synchronanlauf hängt von der Netzphase zum Einschaltaugenblick sowie von der Rotorlage beim Einschalten ab. Eine bestimmte Einschaltdauer führt daher in der Regel zu unterschiedlichen, zurückgelegten Wegen. Ein derartiger Antrieb ist deshalb nur für einfache Positionieraufgaben mit geringen Genauigkeitsanforderungen geeignet, bei denen in der Regel Wegsensoren, z.B. Endschalter, den Weg begrenzen. Reicht die Genauigkeit nicht aus, so müssen wesentlich aufwendigere Antriebssysteme, z.B. Schrittmotoren, eingesetzt werden.

Aus der DE-PS 14 13 494 ist bereits ein Einphasen-Synchronmotor bekannt, bei dem der Rotor durch die dort vorhandenen Rastmomente in eine definierte Ausgangslage gebracht wird. Dazu sind die Statorpole etwas seitenversetzt angeordnet, so daß sich der Rotor in unbestromter Lage schräg stellt und dann bei Bestromung entsprechend anlaufen kann. Es ist bei diesem Einphasenmotor eine Stellung des Rotors vorgesehen, die außerhalb des Nulldurchganges des Drehmomentes liegt. Dadurch wird sichergestellt, daß der Rotor beim Einschalten stets anläuft. Allerdings ist hierbei von vornherein nicht sichergestellt, in welche Richtung der Motor anläuft. Um dies zu vermeiden, werden teilweise mechanische Rücklaufsperren eingesetzt.

Weiterhin ist es bekannt, bei Einphasenmotoren eine Lagerückmeldung des Rotors vorzusehen, durch die die beiden möglichen, um 180° zueinander verdrehten Rotorlagen erkannt werden können. Je nach Lage des Rotors erfolgt dann eine phasenrichtige Bestromung des Stators für einen gewünschten Anlauf.

Aufgabe der vorliegenden Erfindung ist es, ein Verfahren zum Betreiben eines Synchronmotors zu schaffen, durch das der Einsatzbereich solcher Synchronmotoren wesentlich erweitert ist. Dabei soll insbesondere auch bei größeren Trägheitsmomenten ein sicherer Anlauf des Motors erreicht werden. Die zum Betreiben des Synchronmotors erforderlichen Maßnahmen sollen einen nur geringen Aufwand verursachen, wobei aber die erzielten Vorteile etwa vergleichbar mit denen bei Betrieb eines wesentlich aufwendigeren Schrittmotors im Start-Stop-Betrieb sein sollen. Die erzielbare Positioniergenauigkeit soll für eine Vielzahl von Anwendungsfällen ausreichend genau sein. Schließlich soll der Synchronmotor weiterhin an "normaler" Netzwechselspannung betrieben werden können.

Zur Lösung dieser Aufgabe wird erfindungsgemäß insbesondere vorgeschlagen, daß vor dem Anlaufen des Motors zunächst in einer Ausrichtphase wenistens ein Strang des Synchronmotors mit Gleichstrom gespeist wird und daß anschließend etwa im Nulldurchgang und bezüglich der Flankenrichtung der Netzspannung nach diesem Nulldurchgang passend zur Ausrichtstellung des Rotors, im Sinne der Erzeugung eines Drehmomentes in einer gewünschten Laufrichtung, der Motor ans Netz geschaltet wird. Durch die Gleichstrom-Speisung in der Ausrichtphase wird der Rotor in eine gewünschte optimale Anlaufposition gebracht. In dieser Stellung hat sich der Rotor auf die magnetische Bezugsachse des Hilfsstranges eingestellt. Diese Lage befindet sich um 90° entgegen der Drehrichtung versetzt zum Hauptstrang. Somit wird beim Einschalten des Hauptstrangs der Rotor mit maximal möglichem Drehmoment in die gewünschte Drehrichtung beschleunigt. Durch diese günstigere Startposition kann der Motor auch gegen ein höheres Massenträgheitsmoment anlaufen. Außerdem erhält man durch die stets gleiche Anfangslage des Rotors einen definierteren Anlauf und somit auch eine für viele Anwendungsfälle ausreichende Positioniergenauigkeit. Trotzdem kann der Motor an der üblichen Netzspannung betrieben werden.

Ist der Synchronmotor mit einem Hilfsstrang und einem Hauptstrang unterschiedlicher Bauweise ausgerüstet, so wird der Hilfsstrang in der Ausrichtphase mit Gleichstrom gespeist. Für die anschließende Laufphase wird der Hauptstrang ans Netz geschaltet. Der Hilfsstrang wird dann in üblicher Weise über den Betriebskondensator versorgt.

Eine andere Ausgestaltung des erfindungsgemäßen Verfahrens, wobei beide Stränge des Synchronmotors bezüglich ihrer Wicklungen gleich ausgebildet sind, sieht vor, daß je nach gewünschter Drehrichtung des Synchronmotors die Netzspannung nach dem Nulldurchgang mit steigender oder fallender Flanke und in Abhängigkeit der Gleichstromrichtung wahlweise an den einen oder den anderen Strang des Motors geschaltet wird. Der Rotor nimmt somit in der Ausrichtphase die für die jeweils vorgesehene Drehrichtung günstigste Ausgangslage ein. Eine Weiterbildung sieht vor, daß beide Stränge in der Ausrichtphase mit Gleichstrom gespeist werden. In diesem Falle nimmt der Rotor in der Ausrichtphase eine Startposition ein, die zwischen den magnetischen Bezugsachsen der beiden Stränge und somit elektrisch um 45° entgegen der Drehrichtung versetzt zum jeweiligen Hauptstrang liegt. Diese Startlage des Rotors ist für beide Anlaufrichtungen gleichermaßen gut geeignet, so daß hier wahlweise Vorwärts- oder Rückwärtslauf vorgesehen werden kann.

Nach einer Weiterbildung der Erfindung ist vorgesehen, daß unmittelbar nach dem Abschalten der Netzspannung, zum Stoppen des Synchronmotors' ein oder beide Stränge mit Gleichstrom entsprechend der vor dem Anlaufen vorgesehenen Ausrichtphase bestromt werden. Einerseits wird dadurch der Motor aus dem Lauf heraus abgebremst und kommt somit schneller zum Stillstand und außerdem befindet sich der Rotor dann bei Stillstand auch gleichzeitig wieder in einer günstigen Startposition.

Gegebenenfalls wird in der Ausrichtphase bei der Speisung des Hilfsstranges mit Gleichstrom, der Hauptstrang kurzgeschlossen. Das Einpendeln des Rotors in die gewünschte Startposition während der Ausrichtphase erfolgt dadurch wesentlich rascher.

Eine vorteilhafte Ausgestaltung sieht vor, daß der Rotor in der Ausrichtphase in netzfrequente pendelungen um seine Startposition versetzt wird und daß bei einer pendelung in einer gewünschten Laufrichtung der Motor ans Netz geschaltet wird. Dadurch ergibt sich ein noch besseres Anlaufverhalten des Motors, wobei dieser dann auch noch gegen größere Trägheitsmomente anlaufen kann.

Die Erfindung betrifft auch einen Synchronmotor mit einem Hauptstrang und einem Hilfsstrang sowie mit einem Betriebskondensator, wobei die beiden Strangwicklungen mit dem Betriebskondensator im Dreieck geschaltet sind mit einem die beiden Strangwicklungen verbindenden Knoten sowie mit zwei Knoten, die jeweils ein Strangwicklungsende und einen Kondensator-Anschluß verbinden.

Erfindungsgemäß ist bei einem solchen Synchronmotor vorgesehen, daß in einer Netzzuleitung zu einem mit dem Betriebskondensator und einem Strang verbindenden Knoten zumindest ein Schalter und in einer weiteren Netzzuleitung zu dem anderen, einen Kondensator-Anschluß und ein Strangende verbindenden Knoten eine Reihenschaltung mit einem Gleichrichter und einem Schalter oder ein die Funktion dieser Reihenschaltung nachbildender Ersatz vorgesehen sind und daß die beiden in den Netzzuleitungen befindlichen Schalter als miteinander gekoppelte, wechselweise schließende bzw. öffnende Schalter ausgebildet sind.

Wie schon in Verbindung mit dem erfindungsgemäßen Verfahren erwähnt, erhält man durch die erfindungsgemäßen Maßnahmen mit einer einfachen Schaltung bei einem Synchronmotor gemäß dem Oberbegriff des Vorrichtungshauptanspruches vergleichbare Vorteile wie bei einem Schrittmotor im Start-Stop-Betrieb. Dies bedeutet, daß mit einer gleichbleibenden Drehzahl in Abhängigkeit der Netzfrequenz und der Polpaarzahl des Motors ein Betrieb erfolgen kann. Die hiermit erzielbare Positioniergenauigkeit reicht für eine große Anzahl von Anwendungsfällen aus. Dabei liegt ein Hauptvorteil darin, daß ein nur sehr geringer Aufwand für die Steuerschaltung erforderlich ist und daß mit üblicher Netzspannung gearbeitet werden kann.

Zweckmäßigerweise sind als Schalter elektronische Halbleiterschalter, vorzugsweise Thyristoren und eine elektronische Steuervorrichtung vorgesehen. Die Thyristoren können hierbei gleichzeitig die Funktion eines Schalters und eines Gleichrichters übernehmen, so daß auch hier der Aufwand klein gehalten werden kann.

Eine bevorzugte Ausführungsform sieht vor, daß der Hauptstrang und der Hilfsstrang gleich ausgebildet sind und daß die beiden in den Netzzuleitungen befindlichen, elektronischen Halbleiterschalter durch jeweils zwei antiparallel geschaltete Thyristoren gebildet sind.

Dadurch besteht die Möglichkeit, den Synchronmotor wahlweise in unterschiedlicher Drehrichtung zu betreiben und außerdem kann die Gleichstrom speisung in der Ausrichtphase über eine oder beide Netzzuleitungen erfolgen, wobei die Stromrichtung vorwählbar ist.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt:

Fig. 1 ein Prinzip-Schaltbild eines Synchronmotors mit Anlaufschaltung,

Fig. 2 ein Diagramm mit den prinzipiellen Spannungsverläufen beim Ausrichten, beim Lauf und beim Stoppen des Motors,

Fig. 3 bis 5,

Fig. 6 bis 8,

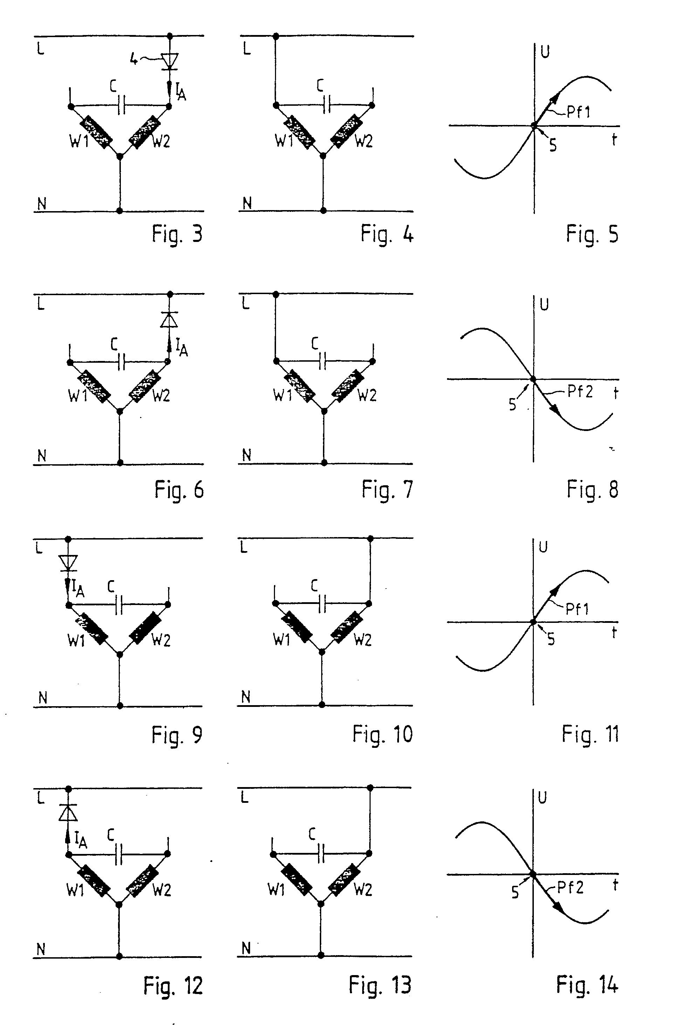

Fig. 9 bis 11, jeweils Schaltbilder mit zugeordneten

Fig. 12 bis 14 Wechselspannungsdiagrammen mit Darstellung der Ausrichtphase und der Laufphase,

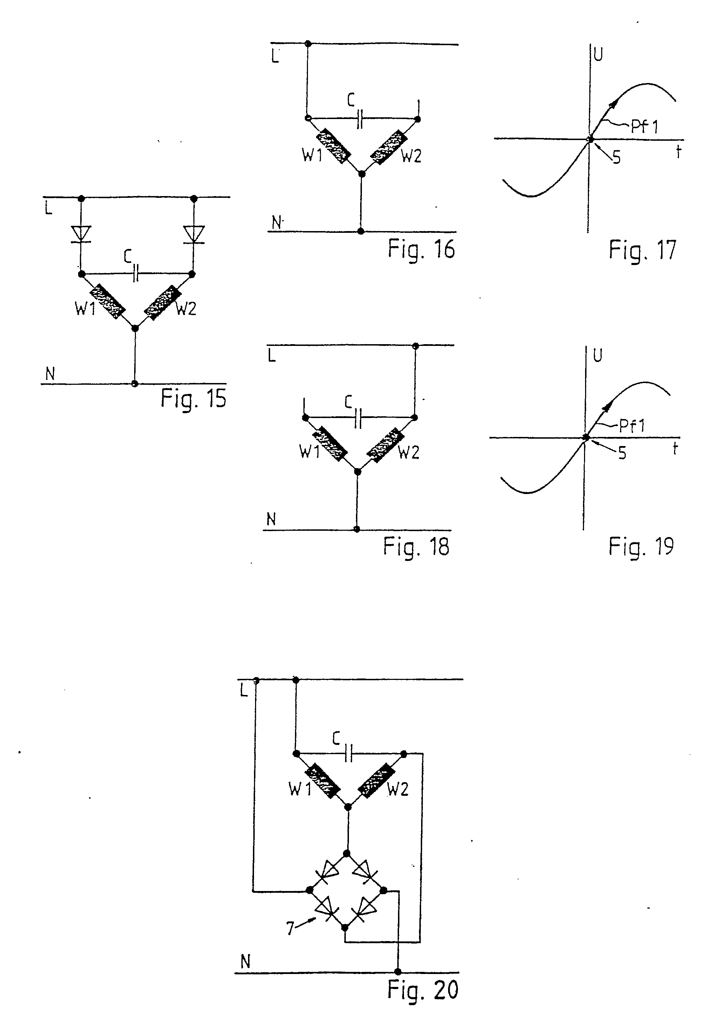

Fig. 15 ein Schaltbild mit Bestromung beider Stränge in der Ausrichtphase sowie

Fig. 16 u. 17 die Schaltung in der Laufphase und zugeordnetem Diagramm der Netzwechselspannung zur Startphase,

Fig. 18 u. 19 eine Darstellung entsprechend Fig. 16 und 17, hier jedoch für entgegengesetzte Laufrichtung, und

Fig. 20 ein Prinzip-Schaltbild eines Synchronmotors in der Ausrichtphase mit Pendelung des Rotors.

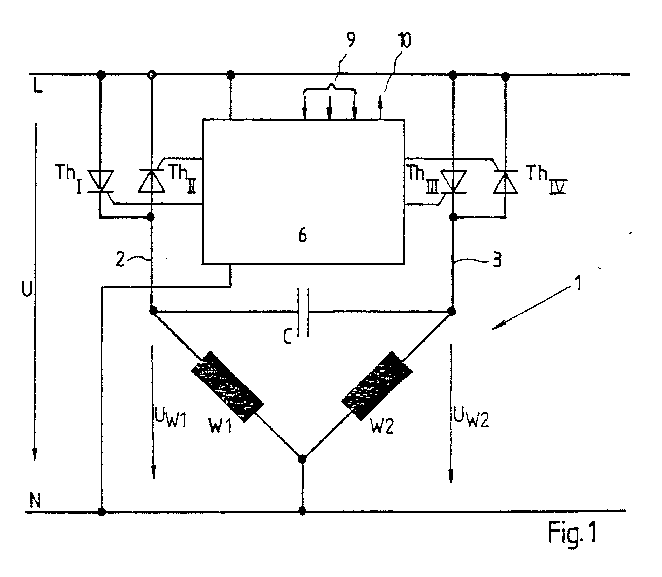

Fig. 1 zeigt das Schaltbild eines zweisträngigen Synchronmotors 1 mit einem Betriebskondensator C. Die beiden Stränge bzw. die Strangwicklungen sind mit W1 und W2 bezeichnet. Die beiden Stränge und der Kondensator sind zu einem Dreieck verbunden, wobei die beiden Stränge jeweils mit einem Ende an einen Leiter N des Versorgungsnetzes angeschlossen sind. Die beiden anderen Enden der Stränge, an die der Kondensator C angeschlossen ist, können über Netzzuleitungen 2 bzw. 3 an den anderen Leiter L des Versorgungsnetzes geschaltet werden.

Zum Betreiben eines solchen Synchronmotors 1 wird z. B. die Netzzuleitung 2 an den Netzleiter L geschaltet. Die Strangwicklung W1 bildet dann den Hauptstrang und der andere Strang W2 bildet den Hilfsstrang, der über den Betriebskondensator C versorgt wird.

Soll die Drehrichtung des Rotors wählbar sein, werden beide Stränge W1 und W2 bezüglich ihrer Wicklungen gleich ausgelegt, so daß dementsprechend die eine oder die andere Strangwicklung einmal den Hauptstrang und einmal den Hilfsstrang bilden können.

Das Anlaufverhalten eines so betriebenen Synchronmotors hängt stark von der Einschaltphasenlage des Netzes sowie auch von der Rotorlage im Einschaltaugenblick ab. Bei ungünstigen Einschaltbedingungen wäre das maximale Trägheitsmoment, mit dem der Motor für einen sicheren Anlauf belastet werden dürfte, nur etwa halb so groß wie im günstigsten Falle.

Um nun diese günstigen Einschaltbedingungen zu erzielen, wird erfindungsgemäß vorgeschlagen, daß vor dem Anlaufen des Motors zunächst in eine Ausrichtphase wenigstens ein Strang des Synchronmotors mit Gleichstrom gespeist wird. Dadurch wird der Rotor vor dem Anlaufen in eine günstige Ausgangs-Startposition gebracht, aus der heraus er in der Lage ist, sicher gegen ein maximales Trägheitsmoment anzulaufen. Nach der Ausrichtphase wird im Nulldurchgang der Netzspannung eingeschaltet, was elektronisch relativ einfach zu realisieren ist.

Die Gleichstrom-Richtung in der Ausrichtphase und die Phasenlage der Netzspannung bzw. deren Flankenrichtung beim Einschalten, müssen so aufeinander abgestimmt sein, daß ein Drehmoment in der gewünschten Laufrichtung erzeugt wird. Das anfänglich wirkende Drehmoment wird dabei am größten, wenn der Rotor gegenüber dem Hauptstrang um elektrisch 90° verdreht steht. Je nach dem, ob im Nulldurchgang mit steigender oder fallender Flanke eingeschaltet wird, muß sich der Rotor um 90° nach oder vor der magnetischen Bezugsachse des Hauptstranges befinden.

Die Figuren 3 bis 5 zeigen die Schaltung in der Ausrichtphase (Fig. 3) und in der Betriebsphase (Fig. 4) sowie die passend zugeordnete phasenlage der Netzspannung (Fig. 5). Hierbei ist erkennbar, daß zunächst in der Ausrichtphase über die Strangwicklung W2 - Hilfsstrang - und den Gleichrichter 4 ein "Ausrichtstrom" $I_A$ gemäß der eingezeichneten Pfeilrichtung fließt. Der Rotor richtet sich dabei so aus, daß er gegenüber dem Hauptstrang um elektrisch 90° verdreht steht.

Anschließend wird dann in die Schaltung nach Fig. 4 umgeschaltet, wobei der Gleichstrom im Hilfsstrang W2 unterbrochen wird und der Hauptstrang W1 an die Netzphase L geschaltet wird. Dieses Umschalten erfolgt im Nulldurchgang 5 der Netzwechselspannung, wobei der Gleichstromrichtung in der Ausrichtphse eine Wechselspannung mit steigender Flanke nach dem Nulldurchgang 5 entsprechend dem Pfeil 1 zugeordnet ist. Beispielsweise ergibt sich hier ein Linkslauf des Rotors. Gleiche Verhältnisse, also ein Links lauf würde sich ergeben, wenn entsprechend den Fig. 6 bis 8 zunächst ein Gleichstrom in der Ausrichtphase mit gegenüber Fig. 3 umgekehrter Richtung und ein Einschalten im Nulldurchgang mit fallender Flanke der Netzspannung gemäß dem Pfeil Pf 2 in Fig. 8 erfolgen würde. Der Rotor würde bei der Speisung gemäß Fig. 6 eine gegenüber der Ausrichtlage nach Fig. 3 um 180° verdrehte Lage einnehmen. Dementsprechend ist dann beim Umschalten des Motors ans Netz im Nulldurchgang auch die Wechselspannung entsprechend um 180° phasenverschoben gegenüber der Wechselspannung in Fig. 5.

Für eine entgegengesetzte Laufrichtung kann entweder die in den Fig. 9 bis 11 gezeigte Gleichstromrichtung in der Ausrichtphase und auch die entsprechend in Fig. 11 zugeordnete Netzphasenlage oder analog dazu die in den Fig. 12 bis 14 gezeigte Gleichstromrichtung bzw. Phasenlage der Netzspannung vorgesehen sein.

Bei den Gleichstromspeisungen in der Ausrichtphase gemäß den Fig. 3, 6, 9, 12 ergeben sich Rotor-Ausrichtlagen, von denen jeweils nur in eine bestimmte Richtung gestartet werden kann. Soll nun nach der Ausrichtphase noch die Möglichkeit bestehen, daß der Motor wahlweise sowohl mit Linkslauf oder mit Rechtslauf starten kann, wird eine Ausrichtlage des Rotors vorgesehen, die sich genau zwischen den Bezugsachsen der beiden Stränge und somit elektrisch 45° entgegen der Drehrichtung versetzt zum jeweiligen Hauptstrang befinden. Diese Rotorlage ist dann für beide Anlaufrichtungen gleichermaßen gut geeignet. Eine solche Ausrichtlage des Rotors erreicht man, indem beide Stränge W1 und W2 gleichzeitig mit Gleichstrom gespeist werden, wie dies in Fig. 15 gezeigt ist. Anschließend kann dann entweder die Strangwicklung W1 (Fig. 16) oder die Strangwicklung W2 (Fig. 18) ans Netz geschaltet werden, wobei sich bei gleicher Phasenlage der Netzwechselspannung, wie dies in den Fig. 17 und 19 angedeutet ist, unterschiedliche Drehrichtungen ergeben.

Bezüglich der Gleichstromrichtung in der Ausrichtphase und der zugeordneten "Startflanke" der Netzwechselspannung gilt analoges wie anhand der Fig. 3 bis 14 erläutert.

Erwähnt sei noch, daß bei einer Gleichstrom-Speisung nur eines Stranges die andere Strangwicklung (Hauptstrang) kurzgeschlossen werden kann, wodurch sich der Rotor schneller und gedämpft in die vorgesehene Ausrichtlage einpendelt.

Fig. 1 zeigt auch eine praktische Schaltung zur Realisierung der Erfindung. In die Netzzuleitungen 2 und 3 sind hier jeweils zwei antiparallel geschaltete Thyristoren $Th_I$, $Th_{II}$, $Th_{III}$, $Th_{IV}$ eingesetzt. Die Gates der Thyristoren sind mit einer Steuervorrichtung 6 verbunden, welche ihrerseits Steuereingänge 9 für Eingangssignale zur Laufrichtungsbestimmung, zum Ausrichten und Bremsen aufweist. Außerdem kann diese Steuervorrichtung 6 noch einen Impulsausgang 10 haben, an dem entsprechend der Periodendauer der Wechselspannung entsprechende Impulse anstehen.

Durch die als elektronische Schalter und gleichzeitig als Gleichrichter dienenden Thyristoren lassen sich die unterschiedlichsten Betriebszustände schalten.

Sollte der Funktionsablauf entsprechend der Fig. 3 bis 5 realisiert werden, so wird zunächst der Thyristor $Th_{III}$ für die Ausrichtphase durchgeschaltet und anschließend werden für die Laufphase die beiden Thyristoren $Th_I$ und $Th_{II}$ angesteuert, während die beiden anderen, in der Netzzuleitung 3 liegenden Thyristoren gesperrt werden. Analoges gilt für den Betrieb gemäß der Fig. 6 bis 8 bzw. 9 bis 11 oder Fig. 12 bis 14.

Soll die Möglichkeit bestehen, den Motor wahlweise in die eine oder andere Laufrichtung anlaufen zu lassen, so werden entsprechend Fig. 15 beispielsweise der Thyristor $Th_I$ und $Th_{III}$ eingeschaltet. Ab dem Nulldurchgang 5 der Netzspannung werden dann mit ansteigender Flanke je nach gewünschter Laufrichtung die Thyristoren $Th_I$ und $Th_{II}$ oder die Thyristoren $Th_{III}$ und $Th_{IV}$ eingeschaltet. Dies würde dann den Fig. 16 bzw. 18 entsprechen.

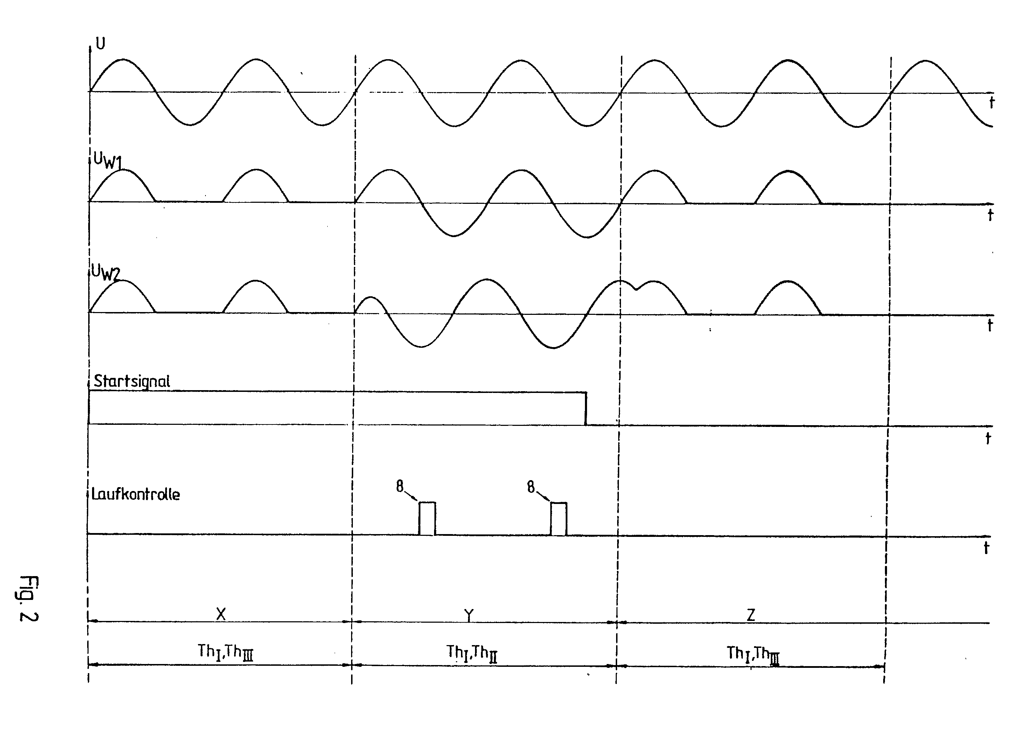

Fig. 2 zeigt ein Diagramm mit den prinzipiellen Spannungs verläufen beim Ausrichten, beim Lauf und beim Stoppen des Motors. Diese drei Bereiche sind mit X, Y und Z gekennzeichnet. In der Ausrichtphase X werden beispielsweise die Thyri sto ren $Th_I$ und $Th_{III}$ in Fig. 1 durchgeschaltet, so daß durch beide Stränge W1 und W2 ein (pulsierender) Gleichstrom fließt. Entsprechend ergeben sich an den Strangwicklungen WI und W2 Spannungsverläufe $U_{W1}$ und $U_{W2}$, wie dies in der zweiten und dritten Zeile des Diagrammes nach Fig. 2 erkennbar ist.

In der sich anschließenden Laufphase Y sind je nach gewünschter Laufrichtung entweder die Thyristoren $Th_I$ und $Th_{II}$ oder $Th_{III}$ und $Th_{IV}$ durchgeschaltet. Im vorliegenden Diagramm bildet die Strangwicklung W1 den Hauptstrang, so daß in der Laufphase Y die Thyristoren $Th_I$ und $Th_{II}$ leiten.

In dem Diagramm ist auch gut die sich einstellende Phasenverschiebung der an den Strangwicklungen anstehenden Wechselspannungen erkennbar, wobei die Spannung an dem Hauptstrang W1 netzsynchron verläuft und die Spannung am Hilfsstrang W2 eine durch den Kondensator C verursachte Phasenverschiebung hat.

In der Laufphase liefert die Steuervorrichtung 6 Laufkontroll-Impulse 8, die in der fünften Zeile des Diagrammes dargestellt sind und netzsynchron beim jeweiligen Nulldurchgang mit fallender Flanke erzeugt werden.

An die Laufphase Y schließt sich in dem gezeigten Diagramm eine Stop-Phase Z an, wo die gleiche Gleichstrom-Speisung der beiden Strangwicklungen W1 und W2 wie in der Ausrichtphase X erfolgt. Der Rotor nimmt dadurch im Stillstand wieder die gleiche Lage wie in der Ausrichtphase X ein. Während der Stop-Phase Z sind die Thyristoren $Th_I$ und $Th_{III}$ durchgeschaltet.

Aus dem Vorbeschriebenen ist erkennbar, daß durch die Erfindung ein Start-Stop-Betrieb mit dem Synchronmotor 1 durchgeführt werden kann, so daß der Motor für eine Vielzahl von Positionieraufgaben herangezogen werden kann. Der Motor läuft dabei in Abhängigkeit der vorgegebenen Netzfrequenz mit gleichbleibender Drehzahl. Ein besonderer Vorteil liegt darin, daß ein gegenüber Schrittmotoren wesentlich reduzierter Aufwand für die Steuerschaltung und auch bezüglich der Stromversorgung vorhanden ist. Wie bereits vorerwähnt, kann die Steuerschaltung mit einem Impulsausgang versehen sein, der z.B. auch an einen Zähler angeschlossen sein kann, mit dessen Hilfe das Abschalten des Motors an der gewünschten Zielposition vorgenommen werden kann.

Zum Stoppen des Motors können ein oder beide Stränge W1 und W2 mit Gleichstrom entsprechend der vor dem Anlaufen vorgesehenen Ausrichtphase zur gleichen Netzphasenlage gespeist werden. Dadurch ist sichergestellt, daß sich der Motor im Stillstand in der gleichen Position wie in der Ausrichtphase befindet. Die Anzahl der möglichen, mechanischen Stellungen ist dabei gleich der Polpaarzahl des Motors.

Fig. 20 zeigt noch eine abgewandelte Schaltung für die Ausrichtphase. Es ist hier am Verbindungsknotenpunkt der beiden Strangwicklungen W1 und W2 ein Brückengleichrichter 7 so angeschlossen, daß in der Ausrichtphase die Hauptstrangwicklung W1 mit einweggleichgerichteter Spannung versorgt wird, während der Hilfsstrang W2 mit doppelweggleichgerichteter Spannung gespeist wird. Dabei sorgt der Hilfsstrang für die richtige Startlage des Rotors, während der Hauptstrang für netzfrequente Pendelungen des Rotors um diese Ausrichtlage herum sorgt.

Während nun der Rotor um seine Startposition stationär pendelt, wird im Nulldurchgang der Netzspannung phasenrichtig eingeschaltet, so daß der "Pendelschwung" des Rotors in Anlaufrichtung wirkt und somit das Anlaufverhalten noch weiter verbessert ist.

Alle in der Beschreibung, den Ansprüchen und der Zeichnung dargestellten Merkmale können sowohl einzeln als auch in beliebiger Kombination miteinander erfindungswesentlich sein.

## Ansprüche

1. Verfahren zum Betreiben eines selbstanlaufenden, einen Hilfsstrang und einen Hauptstrang aufweisenden Synchronmotors mit Betriebskondensator an einem Einphasen-Netz, **dadurch gekennzeichnet,** daß vor dem Anlaufen des Motors zunächst in einer Ausrichtphase wenigstens ein Strang des Synchronmotors mit Gleichstrom gespeist wird und daß anschließend etwa im Nulldurchgang und bezüglich der Flankenrichtung der Netzspannung nach diesem Nulldurchgang passend zur Ausrichtstellung des Rotors, im Sinne der Erzeugung eines Drehmomentes in einer gewünschten Laufrichtung, der Motor ans Netz geschaltet wird.

2. Verfahren nach Anspruch 1, dadurch gekennzeichnet, daß der Hilfsstrang in der Ausrichtphase mit Gleichstrom gespeist wird und daß anschließend der Hauptstrang ans Netz geschaltet wird.

3. Verfahren nach Anspruch 1 oder 2, wobei beide Stränge des Synchronmotors bezüglich ihrer Wicklungen gleich ausgebildet sind, dadurch gekennzeichnet, daß je nach gewünschter Drehrichtung des Synchronmotors die Netzspannung nach dem Nulldurchgang mit steigender oder fallender Flanke und in Abhängigkeit der Gleichstromrichtung wahlweise an den einen oder anderen Strang des Motors geschaltet wird.

4. Verfahren nach Anspruch 3, dadurch gekennzeichnet, daß beide Stränge in der Ausrichtphase mit Gleichstrom gespeist werden.

5. Verfahren nach einem oder mehreren der Ansprüche 1 bis 4, dadurch gekennzeichnet, daß unmittelbar nach dem Abschalten der Netzspannung, zum Stoppen des Synchronmotors, ein oder beide Stränge mit Gleichstrom entsprechend der vor dem Anlaufen vorgesehenen Ausrichtphase gespeist werden.

6. Verfahren nach einem oder mehreren der vorstehenden Ansprüche, dadurch gekennzeichnet, daß in der Ausrichtphase beim Speisen des Hilfsstranges (W2) mit Gleichstrom, der Hauptstrang (W1) kurzgeschlossen wird.

7. Verfahren nach einem oder mehreren der vorstehenden Ansprüche, dadurch gekennzeichnet, daß der Rotor in der Ausrichtphase (X) in netzfrequente Pendelungen um seine Startposition versetzt wird und daß bei einer Pendelung in einer gewünschten Laufrichtung der Motor ans Netz geschaltet wird.

8. Synchronmotor mit einem Hauptstrang und einem Hilfsstrang sowie mit einem Betriebskondensator, wobei die beiden Strangwicklungen und der Betriebskondensator im Dreieck geschaltet sind mit einem die beiden Strangwicklungen verbindenden Knoten sowie mit zwei Knoten, an die jeweils ein Strangwicklungsende und ein Kondensator-Pol angeschlossen sind, dadurch gekennzeichnet, daß in einer Netzzuleitung (2) zu einem mit dem Betriebskondensator (C) und einem Strang (W1) verbundenen Knoten zumindest ein Schalter und in einer weiteren Netzzuleitung (3) zu dem anderen, einen Kondensator-Pol und ein Strangende verbindenden Knoten eine Reihenschaltung mit einem Gleichrichter und einem Schalter oder ein die Funktion dieser Reihenschaltung nachbildender Ersatz vorgesehen sind und daß die beiden in den Netzzuleitungen befindlichen Schalter als miteinander gekoppelte, wechselweise schließende bzw. öffnende Schalter ausgebildet sind.

9. Synchronmotor nach Anspruch 8, dadurch gekennzeichnet, daß als Schalter elektronische Halbleiterschalter, vorzugsweise Thyristoren (Th) und eine elektronische Steuervorrichtung (6) vorgesehen sind.

10. Synchronmotor nach Anspruch 9, dadurch gekennzeichnet, daß der Hauptstrang und der Hilfsstrang gleich ausgebildet sind und daß die beiden in den Netzzuleitungen befindlichen, elektronischen Halbleiterschalter durch jeweils zwei antiparallel geschaltete Thyristoren gebildet sind.

11. Synchronmotor nach Anspruch 9 oder 10, dadurch gekennzeichnet, daß die Steuervorrichtung Eingänge für Vor-und Rückwärtslauf, für Stop u. ggf. einen Impulsausgang aufweist.

12. Synchronmotor insbesondere nach einem oder mehreren der Ansprüche 8 bis 11, dadurch gekennzeichnet, daß in der Ausrichtphase (X) der Hauptstrang (W1) über einen Einweggleichrichter und der Hilfsstrang (W2) über einen Brückengleichrichter od. dgl. an das Wechselstromnetz angeschlossen sind.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

EP 0 400 455 A1

Fig. 15

Fig. 16

Fig. 17

Fig. 18

Fig. 19

Fig. 20

Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-4084120 (B.D.LUND) <br> * Spalte 8, Zeile 44 - Spalte 9, Zeile 22; Figuren 2, 6 * | 1-5, 8 | H02P1/46 <br> H02P3/24 |
| Y |  | 9, 11 | |
| | --- | | |
| Y | DE-B-2135324 (SIEMENS) <br> * Spalte 2, Zeilen 13 - 19; Figur 1 * | 9, 11 | |
| | --- | | |
| X | DE-A-3221048 (DANFOSS A/S) <br> * Seite 6, Zeilen 8 - 25 * <br> * Seite 10, Zeilen 30 - 34; Figur 1 * | 8 | |
| | ----- | | |

**RECHERCHIERTE SACHGEBIETE (Int. Cl.5 )**

H02P

Der vorliegende Recherchenbericht wurde für alle Patentansprüche erstellt

| Recherchenort | Abschlußdatum der Recherche | Prüfer |
|---|---|---|
| BERLIN | 22 AUGUST 1990 | LEOUFFRE, M |